# EUROPEAN PATENT SPECIFICATION

(11) **EP 1 427 291 B1**
(45) Date of publication and mention of the grant of the patent: **16.05.2007**
(21) Application number: 02765027.4
(22) Date of filing: 17.09.2002
(51) Int. Cl.: A23B 4/06

(54) **TENDERIZATION OF POULTRY MEAT**
VERFAHREN ZUM ZARTMACHEN VON GEFLÜGELFLEISCH
ATTENDRISSEMENT D'UNE VIANDE DE VOLAILLE

(30) Priority: 18.09.2001 GB 0122525; 25.04.2002 GB 0209497
(43) Date of publication of application: 16.06.2004
(73) Proprietor: AIR PRODUCTS AND CHEMICALS, INC., Allentown, PA 18195-1501 (US)
(72) Inventor: MILLER, Jeremy, P., Mortimer, Berkshire, RG7 3NR (GB); JONES, Sean, T., Hampshire RG26 3SY (GB)
(74) Representative: Stones, James Alexander
(86) International application number: PCT/GB2002/004226
(87) International publication number: WO 2003/024235

(56) References cited:
- WO-A-99/21429
- CA-A- 2 016 939
- NL-A- 9 301 244
- US-A- 3 637 405
- US-A- 3 715 891
- US-A- 3 729 773
- US-A- 4 325 221
- US-A- 4 367 630
- US-A- 4 852 358
- US-A- 4 940 599

## Description

The present invention relates to on-the-bone tenderization of poultry meat (i.e. meat from any edible fowl) and provides a method of processing poultry in which maturation is accelerated by rapidly cooling the meat by exposure to a temperature of at most -10°C and then by reducing the rate of cooling for sufficient time to freeze only a portion of the water content in the meat.

In order to minimize poultry meat spoilage and health risk by bacterial growth, poultry birds are chilled after slaughter, plucking, and, usually, decapitation (if slaughter is not by decapitation) and evisceration. It is well known to expose the resultant dressed bird to a cryogenic temperature to form a frozen crust on the carcass to rapidly inhibit bacterial growth on the surface and to limit egress of blood and moisture during subsequent chilling to provide a "fresh" (i.e. non-frozen) product or freezing and thawing of a frozen product. Illustrative prior art disclosures are US-A-3,715,891 (published February 1973); US-A-4,325,221 (published April 1982); US-A-4,367,630 (published January 1983); US-A-4,388,811 (published June 1983); CA-A-2,016,939 (published November 1991) & US-A-5,220,812 (published June 1993), the disclosures of which documents are incorporated by this reference. There is no discussion in any of these references of any effect on tenderness resultant from the crust freezing.

CA-A-2,016,939 discloses crust freezing freshly slaughtered poultry by exposing the dressed bird to a temperature of about -30°F (-35°C) or lower, preferably about -110°F (-80°C), for a period of at least 5 minutes so that the skin is frozen and a part of the meat immediately therebeneath is chilled to form a soft outer crust. The crust-frozen carcass is then equilibrated at a sub-ambient temperature, preferably below 40°F (5°C), to a substantially uniform temperature of 40°F (5°C) or lower. It is reported that equilibration usually takes 30 to 45 minutes and that the birds can be packaged or portioned immediately after equilibration. The stated purpose of the crust freezing is to lower the body temperature more rapidly than by use of an ice-water bath and thereby inhibit bacterial and microbial growth on the outer skin. The ability to package or portion the birds shortly after equilibration is attributed to the absence of a drainage period required to avoid weepage from ice-water bath chilled birds. There is no discussion of any effect on tenderness of the crust freezing. In this connection, it is reported in US-A-6,110,034 *(infra)* that the effect of muscle tension on intact poultry carcasses was not shown until the late 1980s when poultry wings were stretched to increase breast muscle tension and produce a more tender meat.

The tenderness of poultry meat is dependent upon the time that the meat has been left on the bone following slaughter of the bird. After slaughter, the supply of energy to the muscles eventually ceases and the muscles become stiff (causing rigor mortis). If contraction is constrained by the muscles remaining skeletally attached, the muscles become soft again and are tender when cooked. However, if the bird is deboned while the muscles still have energy available, the resultant contraction increases the toughness of the meat. Typically 50 to 80 percent of poultry meat will be tough if removed within two hours of slaughter, whereas 70 to 80 percent will be tender if removed 6 hours after slaughter. Accordingly, poultry processors usually allow the meat to maturate on the bone for 6 to 18 hours before deboning or portioning. This requires storage of the bird at a sufficiently low temperature (usually between 34°F and 40°F; 1 °C to 5°C) to inhibit bacterial and microbial growth and hence contributes significantly to both processing and storage costs.

US-A-6,110,034 discloses the rapid tenderization of poultry breast meat deboned within 10 to 15 minutes after evisceration by clamping the meat between plates to prevent contraction and chilling the clamped meat to 1°C to 4°C typically for 30 minutes to 2 hours by, for example, air chilling or use of an ice slush. Further, it recently has been proposed to use electrical stimulation immediately post-slaughter to accelerate rigor mortis and thereby reduce or eliminate maturation storage.

US-A-3,637,405 discloses a method of processing meat with the intention of avoiding meat juice weeping during storage and improving localised surface tenderization especially following the beating action of mechanical handling apparatus such as feather picking fingers. The process comprises the steps of rapidly chilling meat packaged in a vapour-proof package to freeze up to the outer third of the meat (the "surface zone") and to provide and maintain a temperature gradient throughout the meat of greater than 20°F (7°C) by exposure to a temperature between 0°F and -100°F (-17°C to -74°C) for between 0.5 and 5 hours and then allowing the resultant crust frozen meat to equilibrate by exposure to a temperature between 29°F and 40°F (-1.7°C to +5°C) for usually 3 to 12 hours and preferably for 36 to 42 hours to provide optimum tenderness. The enzymes inherently present in the meat are not inactivated in the internal zone since it is not frozen. Thus, the normal enzymatic mechanisms that occur to naturally tenderise the meat are able to occur during equilibration. There is no suggestion that the crust freezing of the meat could accelerate tenderisation or that the process has any additional advantage when applied to whole poultry as compared with chicken parts.

It is an object of the present invention to accelerate tenderization of poultry meat on-the-bone to reduce the storage time and associated costs in maturating the meat prior to deboning or cooking.

Surprisingly, it has been found that maturation time is considerably reduced if at least the breast of the dressed freshly slaughtered unboned poultry bird is rapidly cooled by exposure to a cooling temperature of at most -10°C and if the rate of cooling is subsequently reduced so that only a portion of the water content of the meat freezes.

Without wishing to be bound by any particular theory, it is believed that the reduction in maturation time occurs because as much of the muscle in the poultry meat as possible is cooled to a temperature just below its initial freezing point (just under -2°C) and held there for a period typically less than one hour. At this temperature, a portion of the water content within the tissue freezes to become ice. As ice forms only from pure water, its formation effectively removes water from the tissue causing an increase in the concentration of salts and other solutes in the remaining liquid water. This increase in concentration appears to initiate chemical reactions that accelerate the onset of tenderization through mechanisms such as rigor mortis and autodigestion. Even though the reaction rates are slow (because the temperature of the bulk of the tissue is subzero), the reactions occur at an increasing rate as the temperature is lowered by at least a few degrees below the initial freezing point. Once these reactions have occurred, in typically less than one hour, the tissues can be warmed. The matured tissue could be described as tempered.

At such temperatures, a rigid frozen crust forms on at least the breast part of the meat. The presence of such a frozen crust not only rapidly removes heat from the surface of the bird but also limits the extent to which muscle can contract during subsequent processing. This frozen crust may also play a part in the tenderization process. The frozen crust will typically be 2 to 4 mm, usually about 3 mm, thick. The entire bird may be crust-frozen.

According to a first aspect of the present invention, there is provided use of a method comprising:
rapidly cooling at least the breast meat of a dressed freshly slaughtered unboned poultry bird by exposure to a cooling temperature of at most -10°C to provide a frozen crust on the breast and a temperature gradient through the breast meat wherein the reduction in the core temperature of the breast meat is no more than 65% of the reduction in the surface temperature of the breast meat; and
reducing the rate at which the breast is cooled to reduce said temperature gradient whilst maintaining the surface temperature of the breast meat below -2°C for sufficient time to freeze only a portion of the water content of the breast meat, to accelerate tenderization of poultry meat.

The term "dressed" as used herein means that the bird has been plucked and, usually but not necessarily, decapitated and/or eviscerated.

The term "poultry" is used herein to include any domestic fowl, for example chickens, ducks, geese, and turkeys, or game or wild fowl, for example grouse, guinea fowls, pigeons, partridges, pheasants and quails. However, the invention has particular application to factory farmed poultry, especially chickens and turkeys.

Ideally, the temperature throughout the meat should be about or just below the initial freezing temperature of the meat. In other words, ideally there is no temperature gradient through the body of the meat which is at a uniform temperature of, for example, from -2°C to -3°C. Typically, at least the breast meat is rapidly cooled so that the reduction in the core temperature of the breast meat is no more than 65% of the reduction in the surface temperature of the breast meat during the rapid cooling step. The thickness of the meat will affect the relative reduction in temperature between the core and the surface but a relative reduction of from 25% to 65% is typical.

The "reduced" temperature gradient between the core and the surface of the breast meat is preferably no more than 10°C. It is particularly preferred if the reduced temperature gradient is no more than 5°C. The surface temperature of the breast meat after said rapid cooling is typically between from -2°C to -20°C and preferably about - 14°C.

In the context of the present application, heat flux is the measure of the rate at which heat is lost from the surface of a poultry bird. Heat flux as a function of temperature is known as the heat transfer coefficient and is measured in W/m²/°C. The poultry bird may be rapidly cooled by exposure to a heat flux of at least 1,000 W/m² and the rate at which the breast meat is cooled may be reduced by exposing the crust-frozen bird to less heat flux. The heat flux for the rapid cooling step is usually from 2,000 W/m² to 50,000 W/m² and preferably from 4,000 W/m² to 10,000 W/m². Typically, the poultry bird is rapidly cooled by exposure to a heat flux of about 6,500 W/m².

The poultry bird is usually rapidly cooled by exposure to a cooling temperature of from below -10°C to -45°C and preferably by exposure to a cooling temperature of about - 30°C which is about the normal operating temperature of a standard blast freezer. The poultry bird is typically rapidly cooled by exposure to the cooling temperature for 10 minutes to 60 minutes. The preferred length of time of exposure to the cooling temperature depends on the cooling temperature itself and the heat flux. As a general guide, for a given heat flux, the colder the cooling temperature, the less time the bird needs to be exposed to it. For example, the inventor has found that if a poultry bird is rapidly chilled by exposure to a cooling temperature of about -10°C at a heat transfer coefficient of about 100 W/m²/°C, it needs to be exposed at that temperature for about 60 minutes for the tenderization to be accelerated in accordance with the invention whereas a poultry bird exposed to a cooling temperature of about -35°C at the same heat transfer coefficient only needs to be exposed to that temperature for about 10 minutes.

The portion of the water content of the breast meat that is frozen is usually between from 5 % to 60 % by mass but is preferably about 10 % by mass.

The crust-frozen bird is preferably exposed to a constant temperature of from -15°C to -2°C for sufficient time to freeze only a portion of the water of the breast meat. The temperature is preferably ramped from the cooling temperature to a temperature of from -15°C to -2°C.

The poultry bird may be cooled using any appropriate technique such as exposure to a cryogenic temperature for a short time, e.g. 2 minutes or less. The term "cryogenic temperature" used herein means a temperature of less than -50°C at atmospheric pressure but it is preferred that the temperature is less than -75°C, especially less than -100°C. Any of the techniques used in the prior art to cryogenically crust freeze a poultry bird can be used provided that rapid cooling is achieved. However, it is preferred that at least the breast of the dressed bird is sprayed with, or immersed in, a liquid cryogen. Liquid nitrogen is the preferred cryogen but other cryogens, for example carbon dioxide, can be used. However, it is preferred that the bird is rapidly cooled by mechanical refrigeration, for example using a standard blast freezer.

After the rapid cooling step (usually immediately after), the total period of time in which the breast meat is cooled at reduced or zero rate is preferably from 25 minutes to 75 minutes. The inventor has found that this total time is dependent on the temperature used to produce the crust-frozen bird for a given heat transfer coefficient if accelerated tenderization is to occur. For example, if the temperature used to produce the crust-frozen bird is about -35°C at 100 W/m²/°C, then ideally the total period of time in which the breast meat is cooled at reduced or zero rate is about 35 minutes. If the temperature used to produce the crust-frozen bird is about -10°C at the same heat transfer coefficient, then the for the total period of time in which the breast meat is cooled at reduced or zero rate is about 60 minutes. The temperature is preferably ramped, i.e. increased at a constant rate, from the cooling temperature over a period of time from 10 minutes to 60 minutes. Once the required new cooling temperature is reached, the bird is then held exposed to that temperature for the remaining time.

During ramping of the temperature from the cooling temperature, the crust-frozen bird is exposed to a decreasing heat flux that is sufficient to extract heat from the breast meat at a rate that allows heat from the core of the meat to diffuse to the surface. Preferably, the heat flux decreases at a constant rate.

At this point, the accelerated tenderization process has taken place and the next step may be to debone (or fillet) and/or portion the tenderized bird. The ideal meat temperature for filleting a poultry bird is typically between +1°C and +5°C and preferably about +2°C. Ideally, there is no temperature gradient throughout the body of the meat. However, the surface temperature (and the temperature of much of the deep meat) of the tenderized bird is usually still subzero and, thus, the tenderized bird would not be ready for filleting which would result in a reduction in the yield of the meat. There is also a temperature gradient through the body of the meat with the core temperature being significantly warmer than the temperature of the surface which may be frozen. Therefore, the tenderized bird is preferably exposed to an equilibrating temperature of from +4°C to +30°C, preferably about +10°C, for sufficient time, typically 10 minutes to 20 minutes depending on the temperature of the tenderized bird, such that the meat is warmed towards an equilibration temperature of from 0°C to +5°C. The equilibration temperature is the temperature that the meat would attain if the temperature gradient were allowed to dissipate without loss of heat from the meat. The temperature of the resultant equilibrated bird is preferably from 0°C to +5°C, more preferably, about +2°C.

Rather than deboning (or filleting) and/or portioning, the equilibrated bird may be cooked whole.

In one embodiment, at least the breast of a dressed freshly slaughtered unboned poultry bird is rapidly cooled by exposure to a cooling temperature of about -35°C for about 10 minutes at 100 W/m²/°C to produce a crust-frozen bird. The crust-frozen is subsequently exposed to a temperature of about -15°C for about 35 minutes at 100 W/m²/°C to produce a tenderized bird. The tenderized bird is exposed to an equilibrating temperature of about +10°C for about 15 minutes.

In another embodiment, at least the breast of a dressed freshly slaughtered unboned poultry bird is rapidly cooled by exposure to a cooling temperature of about - 10°C for about 60 minutes at 100 W/m²/°C to produce a crust-frozen bird. The crust-frozen bird is subsequently exposed to a temperature of about +2°C for about 60 minutes at 100 W/m²/°C to produce a tenderized bird. The tenderized bird is warmed by exposure to an equilibrating temperature of about +10°C for about 20 minutes.

The processed poultry meat preferably has a cooked breast tenderness (as hereinafter defined) of at most 60 Newtons. The preferred cooked breast tenderness is about 40 Newtons. The term "cooked breast tenderness" used herein is the average value of a standard tenderness assessment conducted on strips of deboned breasts cooked in an oven with skin off at 190°C for 18 minutes. Each breast is trimmed to reduce it to a longitudinal strip 20 mm wide by cuts parallel to the predominant muscle fibre alignment of the dorsal muscle and the tenderness measurement is made at the position where the strip has a thickness of 20 mm or at the maximum strip thickness, whichever is the smaller value. The assessments are made using a mechanical texture analyser with a Warner-Brazier blade driven at 0.5 mm/sec and measurements are made 5 minutes after removal from the oven and at three minute intervals thereafter until the meat has cooled.

The period sufficient to provide a cooked breast tenderness (as hereinbefore defined) of 60 Newtons is usually significantly reduced compared with an identical tenderization process excluding said rapid cooling.

The bird can be slaughtered by any method conventionally used in poultry processing but usually electrical stun methods and anoxic gas methods, especially using a mixture of at least two gases selected from nitrogen, argon and carbon dioxide, will be used.

Whilst it is possible that the process be applied to a single poultry bird, it is preferred that a line of dressed freshly slaughtered unboned poultry birds is processed.

The inventors have found that heat from dressed freshly slaughtered unboned poultry birds can be used to at least partially equilibrate warmed birds. This has the secondary advantage of cooling the incoming poultry birds which is beneficial in terms of process speed and efficiency and in terms of operating costs. The method of the present invention can be applied successfully to dressed freshly slaughtered unboned poultry birds that have been pre-cooled as well as to poultry birds taken straight from the slaughter, plucking, and evisceration process.

Preferably, heat transferred from dressed freshly slaughtered unboned poultry birds is used to warm and at least partially equilibrate tenderized birds. Heat is preferably transferred from the poultry birds to the tenderized birds by indirect heat exchange using at least one heat exchange fluid.

In one embodiment of the method, the heat exchange fluid, e.g. air, flows across the surface of said freshly slaughtered birds to produce warmed heat exchange fluid which is then propelled directly on to the surface of tenderized birds.

In another embodiment of the method, a first heat exchange fluid flows across the surface of the poultry birds to produce warmed first heat exchange fluid. A second heat exchange fluid is warmed by indirect heat exchange against at least a portion of said warmed first heat exchange fluid to produce warmed second heat exchange fluid. A third heat exchange fluid is warmed by indirect heat exchange against at least a portion of said warmed second heat exchange fluid to produce warmed third heat exchange fluid which is then propelled directly on to the surface of tenderized birds. In this embodiment, air is preferably used as the first and third heat exchange fluids and a water based heat exchange fluid is used as the second heat exchange fluid, The nature of the water based heat exchange fluid will depend on the temperature at which it is required to operate. For example, if the fluid is required to operate below the freezing point of water then brine or aqueous glycol solutions may be used. On the other hand, if it is required to work above the freezing point of water then water itself may be used. In such embodiments, an anticorrosive agent may be added to the water.

For all embodiments, the or each heat exchange fluid is preferably recycled.

In a second aspect of the present invention, there is provided a method of accelerating tenderization of poultry meat comprising:
rapidly cooling at least the breast meat of an dressed freshly slaughtered unboned poultry bird by exposure to a cooling temperature of at most -10°C to provide a frozen crust on the breast and a temperature gradient through the breast meat wherein the reduction in the core temperature of the breast meat is no more than 65% of the reduction in the surface temperature of the breast meat;
reducing the rate at which the breast is cooled to reduce said temperature gradient whilst maintaining the surface temperature of the breast meat below -2°C for sufficient time to freeze only a portion of the water content of the breast meat and thereby accelerating tenderization of the meat; and
exposing tenderized birds to an equilibrating temperature of from +4°C to +30°C to produce equilibrated birds,
wherein heat transferred from incoming dressed freshly slaughtered unboned poultry birds is used to warm and at least partially equilibrate tenderized birds.

In a third aspect of the present invention, there is provided apparatus for processing poultry meat according to the method of the second aspect, said apparatus comprising:
a cooling zone in which at least the breast of dressed freshly slaughtered unboned poultry birds is rapidly cooled by exposure to a cooling temperature of at most -10°C to provide a frozen crust on the breast and a temperature gradient through the breast meat wherein the reduction in the core temperature of the breast meat is no more that 65% of the reduction in the surface temperature of the breast meat;
a further cooling zone in which the crust-frozen birds are further cooled but at a reduced rate thereby reducing the temperature gradient whilst maintaining the surface temperature of the breast meat below -2°C for sufficient time to freeze only a portion of the water content of the breast meat and thereby tenderize the meat; and
an equilibrating zone in which the tenderized birds are exposed to an equilibrating temperature of from +4°C to +30°C to produce equilibrated birds;
wherein the apparatus further comprises means for transferring heat from incoming dressed freshly slaughtered unboned poultry birds to tenderized birds in the equilibrating zone to warm and at least partially equilibrate said tenderized birds.

The apparatus may be adapted and/or constructed to carry out any combination of the preferred features of the method of the first aspect of the present invention. For example, in one embodiment of the third aspect, the apparatus further comprises:
a pre-cooling zone in heat exchange fluid communication with the equilibrating zone in which the dressed freshly slaughtered unboned poultry birds are pre-cooled by direct heat exchange with a heat exchange fluid to produce warmed heat exchange fluid; and
propelling means for propelling warmed heat exchange fluid directly on to the surface of tenderized birds in the equilibrating zone. In this embodiment, the heat exchange fluid is preferably air.

In a second embodiment of the third aspect, the apparatus preferably further comprises:
a pre-cooling zone thermally integrated with the equilibrating zone in which the dressed freshly slaughtered unboned poultry birds are pre-cooled by direct heat exchange with a first heat exchange fluid to produce warmed first heat exchange fluid;
heat exchange means for transferring heat from at least a portion of said warmed first heat exchange fluid to a second heat exchange fluid to produce warmed second heat exchange fluid;
further heat exchange means in heat exchange fluid communication with the equilibrating zone for transferring heat from at least a portion of said warmed second heat exchange fluid to a third heat exchange fluid to produce warmed third heat exchange fluid; and
propelling means for propelling warmed third heat exchange fluid directly on to the surface of tenderized birds in the equilibrating zone. In this embodiment, the first and third heat exchange fluids are preferably air and the second heat exchange fluid is preferably a water based heat exchange fluid such as water (with or without an anticorrosive agent), brine and an aqueous solution of glycol.

In both embodiments, the propelling means preferably comprises at least one fan.

The apparatus may additionally include a holding zone in which the tenderized birds are held for a period of time at low or zero net heat transfer to assist in the tenderization of the meat.

Throughout the specification, the term "means" in the context of means for carrying out a function is intended to refer to at least one device adapted and/or constructed to carry out that function.

Other important aspects of the present invention include:
- use of heat from dressed freshly slaughtered unboned poultry birds to increase the surface temperature of tendrized birds thereby accelerating the equilibration of tenderized birds towards an equilibrium temperature of from 0°C to +5°C; and
- use of at least one heat exchange fluid to transfer heat from dressed freshly slaughtered unboned poultry birds to tenderized birds to increase the surface temperature of said tenderized birds thereby accelerating the equilibration of tenderized birds towards an equilibrium temperature of from 0°C to +5°C.

The following is a description by way of example only and with reference to the accompanying drawings of presently preferred embodiments of the invention. In the drawings:
Figure 1 is a graph depicting the results from Examples 1 to 4;
Figure 2 is a graph depicting the calculated effect of the present method on the temperature gradient throughout the body of the meat;
Figure 3 is a diagrammatic representation of a top plan view of an embodiment of the apparatus of the present invention having an inline configuration;
Figure 4 is a diagrammatic representation of a side view of the embodiment of Figure 3;
Figure 5 is a diagrammatic representation of a top plan view of another embodiment of the apparatus of the present invention having a loop configuration;
Figure 6 is a diagrammatic representation of a side view of the embodiment of Figure 5;
Figure 7 is a diagrammatic representation of a top plan view of a further embodiment of the apparatus of the present invention in which crust-freezing is achieved by mechanical refrigeration;
Figure 8 is a diagrammatic representation of a side view of the embodiment of Figure 7;
Figure 9 is a series of graphs depicting the calculated temperature gradient through the body of chicken meat at each stage of the method according to the present invention;
Figure 10 is a graph depicted how heat flux can vary over time in accordance with the present invention;
Figure 11 is a graph depicting how the heat flux was varied over time in Example 7; and
Figure 12 is a diagrammatic representation of an additional embodiment of the apparatus of the present invention.

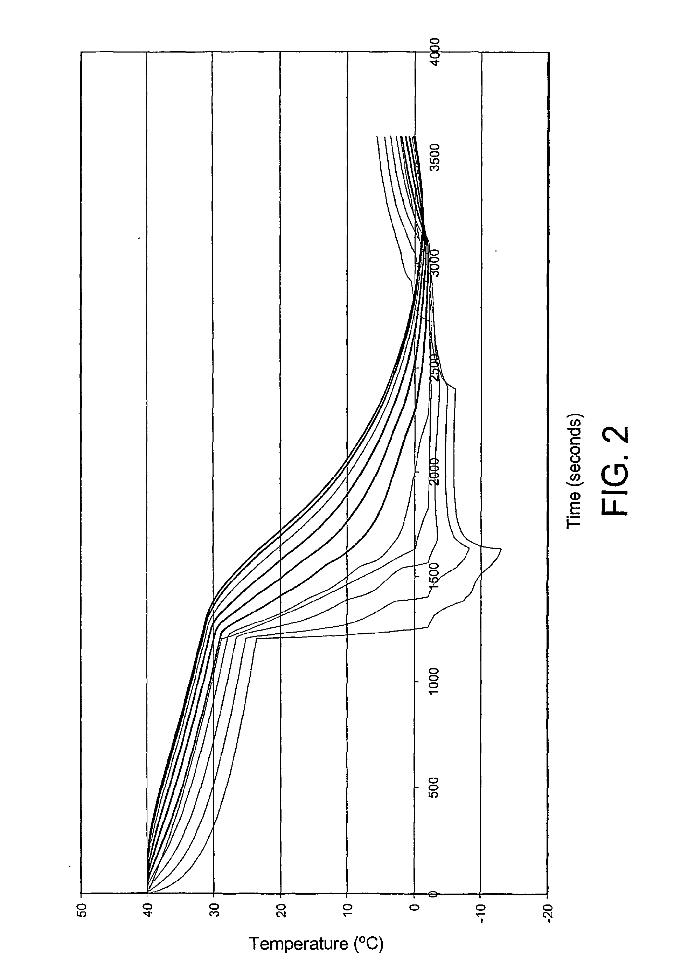

The effect of the present invention on the temperature gradient through the breast meat of a dressed freshly slaughtered unboned poultry bird has been calculated and the results are shown in Figure 2. The calculation has been based on the bird being exposed in an in-coming tunnel to a temperature of +10°C at a heat transfer coefficient of 30 W/m²/°C for 1200 seconds. The pre-cooled bird is exposed to a temperature of -45°C for 430 seconds at 100 W/m²/°C in a mechanical refrigerator to freeze the crust and, once the crust has formed, the temperature is ramped up to -13°C over 770 seconds. The tenderized bird is then exposed in an out-going tunnel to a temperature of +10°C and a heat transfer coefficient of 30 W/m²/°C for 1200 seconds. The equilibration temperature is +1.91°C.

In Figure 2, the temperature at ten positions through the breast is shown i.e. from the surface to the core of the thickest part. In the in-coming tunnel, the surface temperature falls quickly to about +24°C. During the process, the surface temperature falls steeply below 0°C and the core temperature comes slowly down to about +3°C. In the out-going tunnel, the temperature gradient inside the breast is inverted and the surface temperature reaches about +6°C leaving the core at about 0°C. The resultant surface temperature means that the processed birds are ready for filleting.

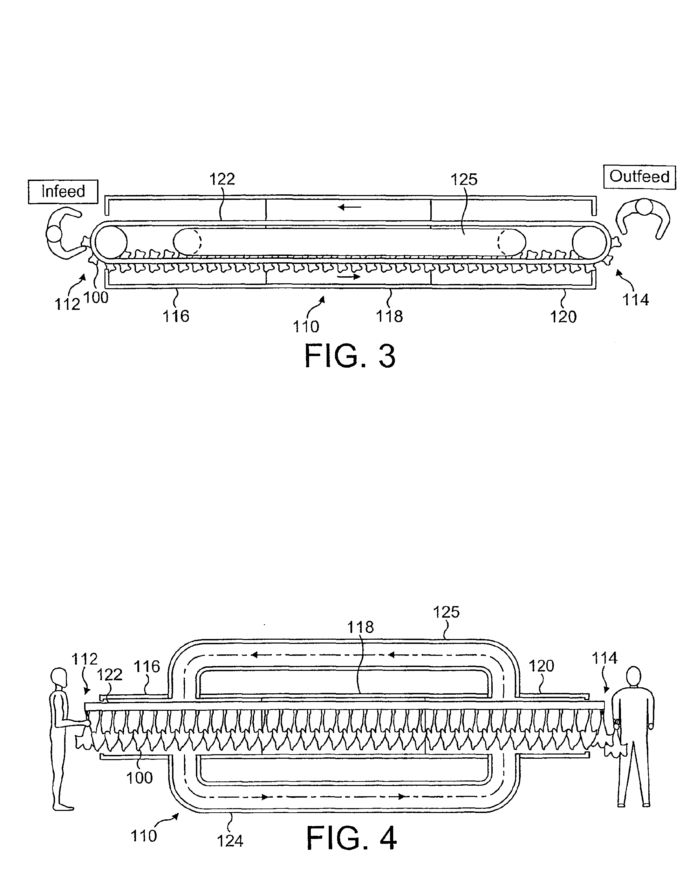

Referring to Figures 3 and 4, the process line 110 has an in-line configuration and comprises an infeed end 112 at which dressed freshly slaughtered unboned poultry birds 100 are introduced to the line 110 and an outfeed end 114 at which equilibrated birds are removed from the line 110. The line 110 comprises a pre-cooling zone 116, a refrigerator section 118 comprising at least one cooling zone and an equilibrating zone 120 and the birds 100 move along the line 110 through each zone via a driven continuous belt 122.

In the pre-cooling zone 116, air is passed around the dressed freshly slaughtered unboned poultry birds 100 where it is warmed by direct heat exchange to produce a stream of warmed air. The warmed air stream is propelled by a fan or blower (not shown) along a conduit 124 to the equilibrating zone 120 where heat from the warmed air stream is exchanged directly with the tenderized birds. The resultant cooled air stream is then recycled along conduit 125 to the pre-cooling zone 116.

Pre-cooled birds are passed from the pre-cooling section 116 to the refrigerator section 118 where they are exposed to a cooling temperature of at most -10°C to provide a frozen crust on the breast and then are further cooled but at a reduced rate to produce tenderized birds. The tenderized birds are then passed to the equilibrating zone 120 where they are warmed to the required equilibration temperature at least in part by direct heat exchange with the stream of warmed air from the pre-cooling section 116. The equilibrated birds are then removed from the line 110 for further processing.

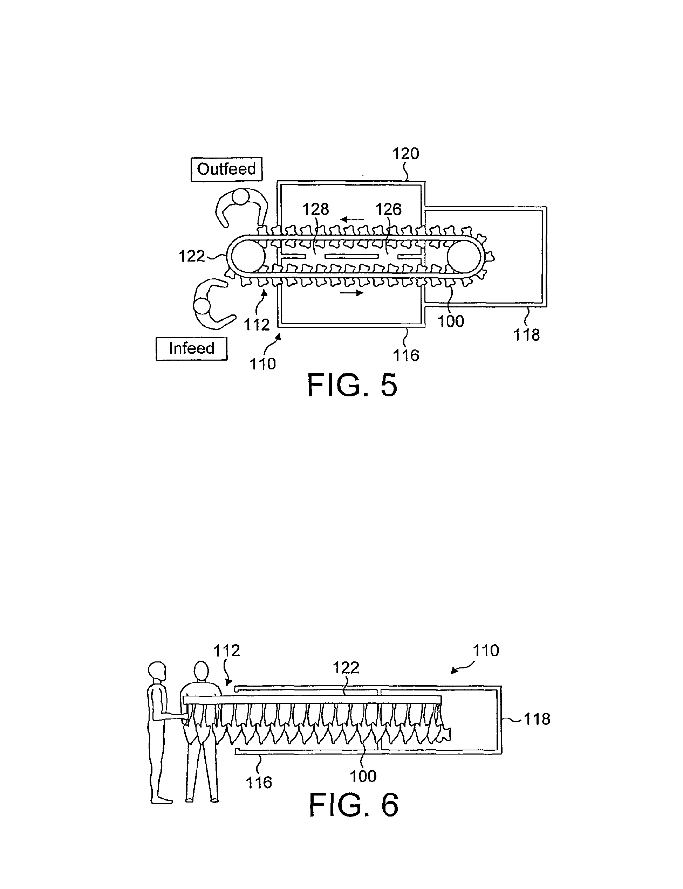

In Figures 5 and 6, the process line 110 has a loop configuration in which both the infeed and outfeed of the line 110 are at one end 112. As with the embodiment depicted in Figures 3 and 4, the line 110 comprises a pre-cooling zone 116, a refrigerator section 118 comprising at least one cooling zone and an equilibrating zone 120 and the birds move along the line 110 through each zone via a driven continuous belt 122.

In the pre-cooling zone 116, air is passed around the dressed freshly slaughtered unboned poultry birds where it is warmed by direct heat exchange to produce a stream of warmed air. The warmed air stream is propelled by a fan or blower (not shown) through aperture 126 (or along a conduit (not shown) similar to that shown in Figures 3 and 4) to the equilibrating zone 120 where heat from the warmed air stream is exchanged directly with the tenderized birds. The resultant cooled air stream is recycled to the pre-cooling zone 116 through aperture 128 (or along a conduit (not shown) similar to that shown in Figures 3 and 4).

Pre-cooled birds are passed from the pre-cooling zone 116 to the refrigerator section 118 where they are exposed to a cooling temperature of at most -10°C to provide a frozen crust on the breast and then are further cooled but at a reduced rate to produce tenderized birds. The tenderized birds are then passed to the equilibrating zone 120 where they are warmed to the required equilibration temperature at least in part by direct heat exchange with the stream of warmed air from the pre-cooling zone 116. The equilibrated birds are then removed from the line 110 for further processing.

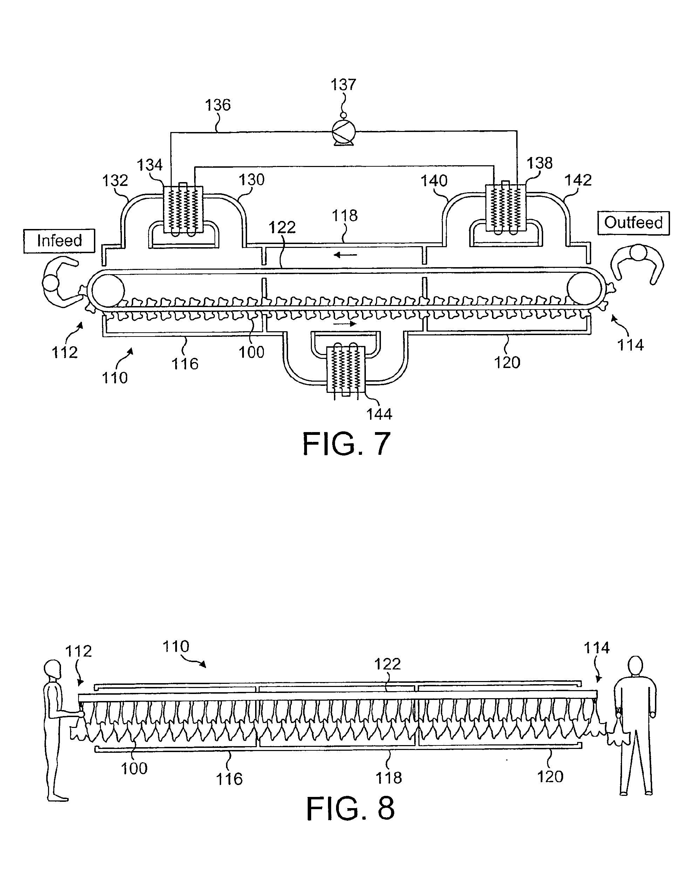

Figures 7 and 8 depict a different arrangement of the embodiment shown in Figures 3 and 4. The process line 110 has an in-line configuration and comprises an infeed end 112 and an outfeed end 114. The line 110 comprises a pre-cooling zone 116, a refrigerator section 118 comprising at least one cooling zone and an equilibrating zone 120 and the birds 100 move through each zone via a driven continuous belt 122.

In the pre-cooling zone 116, air is passed around the dressed freshly slaughtered unboned poultry birds 100 where it is warmed by direct heat exchange to produce a stream of warmed air. The warmed air stream is fed along conduit 130 to a first heat exchanger 134 where at least a portion of it is cooled by indirect heat exchange against a stream 136 of a water based heat exchange fluid. The cooled air exits the heat exchanger 134 and is fed along conduit 132 to the pre-cooling zone 116. The resultant warmed stream of water based heat exchange fluid is then pumped 137 to a second heat exchanger 138 where it is cooled by indirect heat exchange against a further stream of air. The resultant cooled stream of water based heat exchange fluid is recycled 136 to the first heat exchanger 134 whereas the resultant further stream of warmed air is fed along conduit 140 to the equilibrating zone 120 where it warms the tenderized birds by direct heat exchange. The resultant cooled air stream is then recycled along conduit 142 back to the second heat exchanger 138.

The cooling steps of the process are achieved using a mechanical refrigeration unit 144.

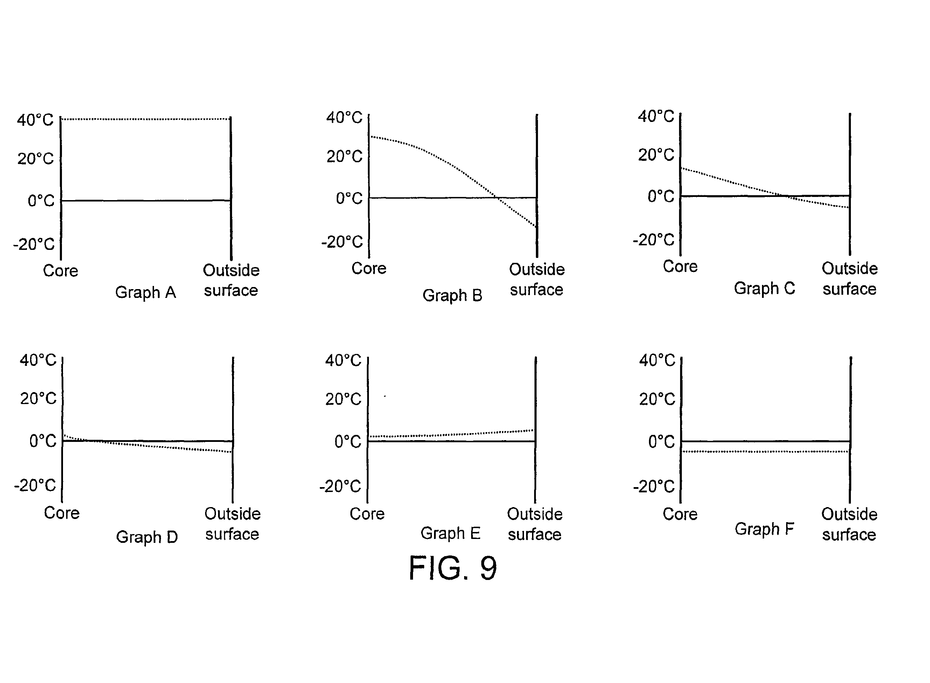

Graphs A to F in Figure 9 depict the calculated temperature gradient through the body of a chicken breast at each stage of the present method as exemplified in Example 6. The temperature throughout the body of the meat following evisceration and before cooling is about +40°C (Graph A). At the end of the cooling step, there is a steep temperature gradient between core and the surface of the meat with core being at about +30°C and the surface being at about -14°C (Graph B). After the temperature has been ramped from the cooling temperature, the temperature gradient is less steep with the core being at about +15°C and the surface being at about -5°C (Graph C). The temperature gradient is deceased further after the meat has been held exposed to this ramped temperature. At this stage, the core is at about +2°C and the surface is at about -5°C (Graph D). After equilibration, the temperature gradient is inverted with the core at about +2°C and the surface at about +5°C (Graph E). Ideally, the temperature throughout the body of the meat should be about -3°C while the meat is held exposed to the ramped temperature (Graph F).

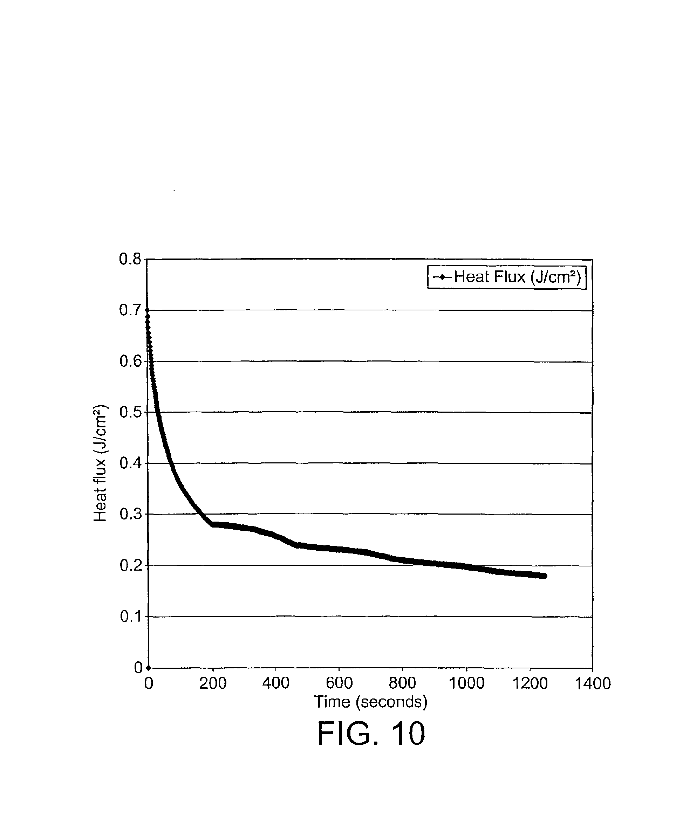

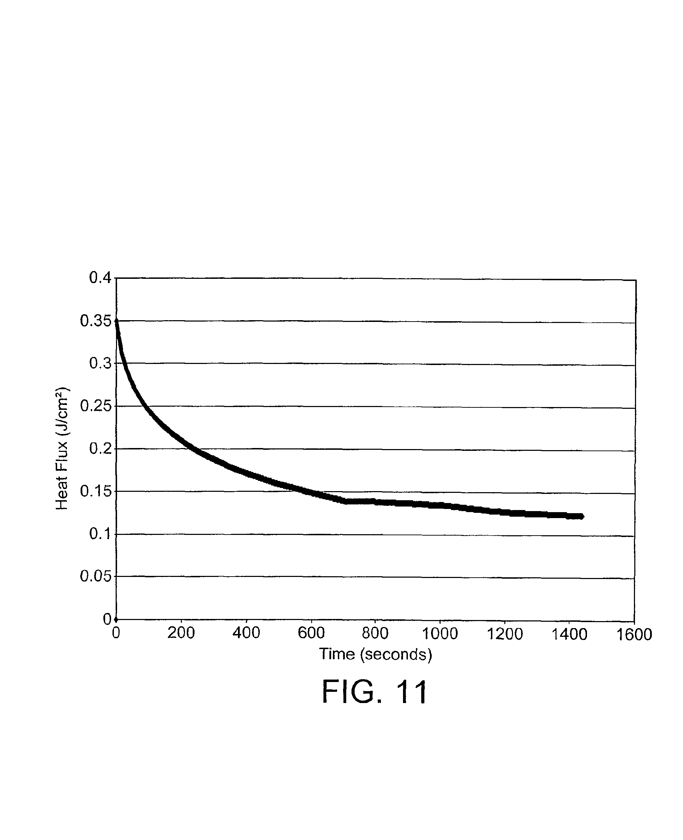

Figure 10 is a graph depicting how heat flux varies over time in an embodiment of the process according to the present invention. Figure 11 is a graph depicting how heat flux varies over time in the process described in comparative Example 7.

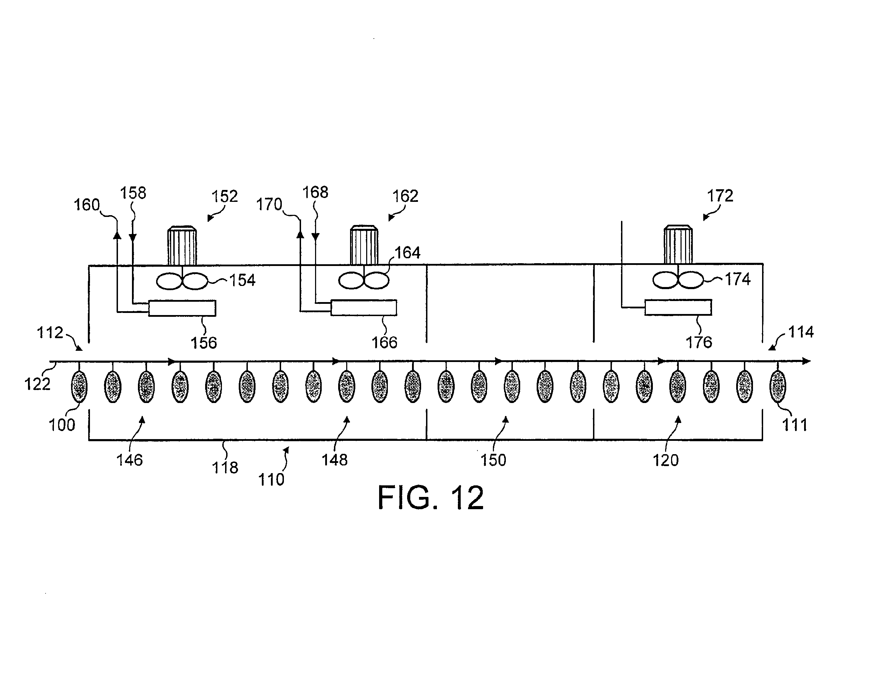

Referring to Figure 12, the process line 110 has an in-line configuration and comprises an infeed end 112 at which dressed freshly slaughtered unboned poultry birds 100 are introduced to the line 110 and an outfeed end 114 at which equilibrated birds 111 are removed from the line 110. The line 110 comprises a refrigerator section 118 comprising a first cooling zone 146 in which the birds are exposed to a cooling temperature of at most -10°C and a second cooling zone 148 in which the temperature to which the crust-frozen birds are exposed is ramped. The line 110 further comprises a holding zone 150 in which the birds are held at the ramped temperature with little or no heat transfer. The line 110 also comprises an equilibrating zone 120 in which the birds are exposed to a temperature of +4°C to +30°C so that equilibration can take place. The birds move along the line 110 through each zone via a driven continuous belt 122. The equilibrated birds 111 are then removed from the line 110 for further processing.

The temperature in the first and second cooling zones 146,148 is controlled by refrigeration units 152, 162. Each unit comprises a fan 154, 164 and a heat exchanger 156, 166. Both heat exchangers 156, 166 have a refrigerant inlet 158, 168 and a refrigerant outlet 160, 170. Extraction of heat from the birds may be controlled by varying the speed at which the fans 154, 164 operate.

The tenderized birds are warmed in the equilibrating zone 120 by a heater 172 comprising a fan 174 and at least one heating element 176.

The invention is illustrated by the following non-limiting Examples.

### Example 1

Freshly slaughtered, defeathered and eviscerated chickens of 1.23 to 1.87 kg (2.71 to 4.12 lbs.) were immersed in liquid nitrogen for 55 seconds. At the end of this period, they were transferred to a +2°C storeroom for an equilibration/maturation period of 20, 60, 90,120, 150 or 180 minutes. After this period, the birds were taken to the kitchen and the breasts were removed and cooked with skin off at 190°C for 20 minutes. The breasts were weighed before and after cooking and the tenderness of the cooked breasts assessed

The tenderness assessment was conducted by subjecting cooked breasts from four birds (or only two when specified) to analysis with a mechanical texture analyser. A Lloyd LRX plus texture analyser was employed with a Warner-Brazier shear blade. Each breast was first trimmed to reduce it to a longitudinally tapered strip 20 mm wide and the measurement was made at the position where the taper had a depth of 30 mm.

For each batch, the texture measurements commenced five minutes after the end of cooking. The time between subsequent measurements was three minutes. For most data points only six of the eight breasts were measured due to time constraints but some breasts were eliminated because the required shape could not be obtained.

The blade was passed through the strip at a speed of 30 mm per minute. The force as a function of distance from the point of first contact was recorded. The tenderness was assessed by comparing the maximum force required during the cutting process.

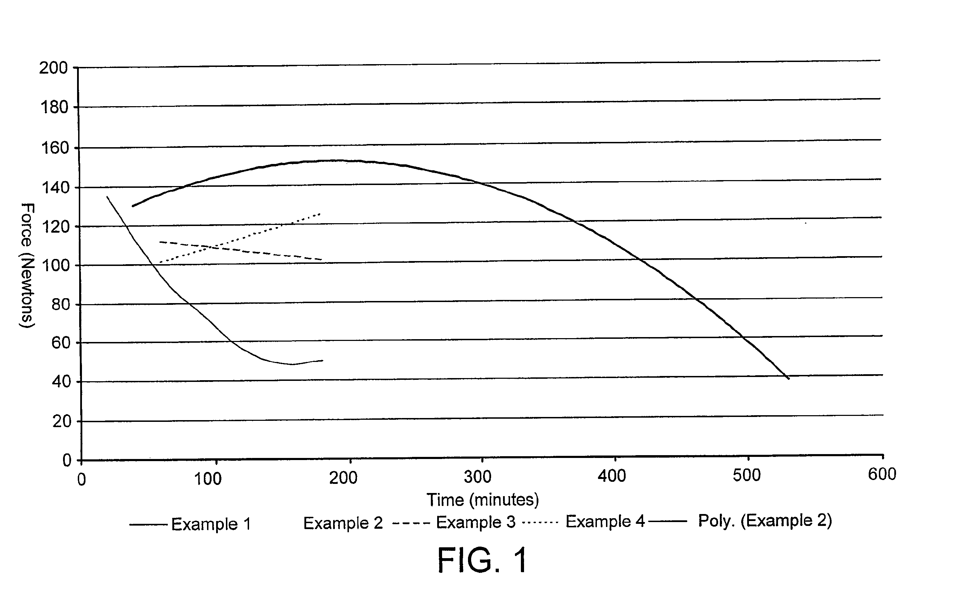

The tenderness assessment results are set forth in Table 1 *(infra)* and shown (as a solid diamond) in Figure 1 in comparison with the tenderness assessment results (shown as a solid square) for Example 2 *(infra).* The weight losses during cooking are set forth in Table 2 (*infra*).

### Example 2 (Comparative)

Chickens which had been freshly slaughtered, defeathered and eviscerated as in Example 1 were collected at the end of a conventional mechanical chill line. They had been in the chiller for 40 minutes and the deep meat temperature was in the range +15.6°C to +22.5°C. Birds were therefore returned to the chiller for a further 20 minutes before transfer to the +2°C storeroom for a total (inclusive of chill time) period of 90, 120, 150, 180, 240, 300, 360, 420 or 530 minutes. After this period, the birds were weighed and the breasts were removed for cooking and assessment as in Example 1. Assessments were also made of birds collected directly from the end of the chill line (i.e. not subjected to the further 20 minutes chilling or subsequent storage).

The tenderness assessment results are set forth in Table 3 *(infra)* and the weight losses during cooking are set forth in Table 4 *(infra).*

**Table 1**

| Tenderness of cooked breast meat from cryogenically crust-frozen chickens | | | | | | | | | |
|---|---|---|---|---|---|---|---|---|---|
| **Cold storage (minutes)** | **Maximum shear Force (Newtons)** | | | | | | | | |
| | Breast 1 | Breast 2 | Breast 3 | Breast 4 | Breast 5 | Breast 6 | Breast 7 | Breast 8 | **Average** |
| **20** | 116.8 | 155.8 | 128.5 | 136.6 | 158.4 | 126.7 | 120.6 | 138.1 | **135.1** |
| **60** | 90.2 | 131.5 | 116.2 | 81.5 | 170.8 | 152.0 | 107.6 | 120.2 | **121.3** |
| **90** | 88.4 | N/A | 68.8 | 66.0 | 73.2 | 75.4 | N/A | 71.8 | **73.9** |
| **120** | 60.5 | 65.8 | 59.0 | 58.5 | 53.4 | 39.6 | | | **56.1** |
| **150** | 49.5 | 53.6 | 50.8 | 35.4 | 39.8 | N/A | 60.2 | | **48.2** |
| **180** | 41.1 | 63.8 | 67.8 | 51.0 | 60.8 | 84.1 | | | **50.1** |

**Table 2**

| Weight loss on cooking breast meat from cryogenically crust-frozen chickens | | | | |
|---|---|---|---|---|
| **Cold storage (minutes)** | **No. of breasts** | **Weight before cooking (gm)** | **Weight after cooking (gm)** | **Weight Loss (%)** |
| **20** | 8 | 1.198 | N/A | |
| **60** | 8 | 1.248 | 0.865 | **30.7** |
| **90** | 8 | 1.177 | 0.833 | **29.2** |
| **120** | 8 | 1.166 | N/A | |
| **150** | 8 | 1.198 | 0.845 | **29.5** |
| **180** | 8 | 1.322 | 0.961 | **27.3** |

**TABLE 3**

| Tenderness of cooked breast meat from conventionally chilled chickens | | | | | | | | | |
|---|---|---|---|---|---|---|---|---|---|
| **Time Chill + Storage (minutes)** | **Maximum shear Force (Newtons** | | | | | | | | |
| | Breast 1 | Breast 2 | Breast 3 | Breast 4 | Breast 5 | Breast 6 | Breast 7 | Breast 8 | **Average** |
| | | | | | | | | | |
| **40*** | 106.9 | 105.9 | 117.2 | 79.7 | 155.9 | 183.7 | 131.0 | 118.6 | **124.9** |
| **90** | 127.4 | 183.4 | 118.3 | 129.8 | 156.6 | 135.8 | | | **141.8** |
| **120** | 170.7 | 196.5 | 119.2 | 115.8 | 152.0 | 139.8 | | | **149.0** |
| **150** | 178.6 | 154.4 | 140.7 | 117.8 | 156.4 | 150.6 | | | **149.8** |
| **180** | 158.8 | 163.0 | 151.7 | 211.2 | 160.8 | 189.6 | | | **172.5** |
| **240** | 133.0 | 132.3 | 139.7 | 154.0 | 112.2 | 128.9 | | | **133.4** |
| **300** | 157.6 | 95.6 | 170.0 | 141.2 | | | | | **141.1** |
| **360** | 85.1 | 176.5 | 175.1 | 71.7 | | | | | **127.1** |
| **420** | 41.0 | 43.5 | 74.9 | 82.3 | 70.2 | 138.5 | 80.0 | 196.1 | **90.8** |
| **530*** | 35.0 | 33.0 | 38.8 | N/A | 35.3 | 44.1 | 73.2 | N/A | **43.2** |

| | | | | | | | | | |
|---|---|---|---|---|---|---|---|---|---|
| * 40 minutes chill only | | | | | | | | | |

**Table 4**

| Weight loss on cooking breast meat from conventionally chilled chickens | | | | |
|---|---|---|---|---|
| **Time Chill + Storage (minutes)** | **No of breasts** | **Weight before cooking (gm)** | **Weight after cooking (gm)** | **Weight Loss (%)** |
| | | | | |
| **40*** | 8 | 1.084 | 0.752 | **30.6** |
| **90** | 8 | 1.441 | 1.072 | **25.6** |
| **120** | 8 | 1.259 | 0.931 | **26.1** |
| **150** | 8 | 1.402 | 1.035 | **26.2** |
| **180** | 8 | 1.270 | N/A | |
| **240** | 8 | 1.285 | 0.924 | **28.1** |
| **300** | 4 | 0.717 | 0.533 | **25.7** |
| **360** | 4 | 0.544 | 0.399 | **26.7** |
| **420** | 8 | 1.447 | 1.121 | **22.5** |
| **530*** | 8 | 1.111 | 0.750 | **32.5** |

| | | | | |
|---|---|---|---|---|
| * 40 minutes chill only | | | | |

As can be seen from Table 1, the cryogenically birds (which are crust-frozen) of Example 1 achieve maturation over a period of 150 minutes, at which time they have a tenderness equal to that measured in birds about 450 minutes after the standard mechanical chill process (see Table 2).

The data for the standard chilled birds show a wide degree of variation in the measurements. The raw data shows that pairs of breasts from the same bird have similar degrees of maturation but that different birds mature at different rates. This may be a function of the weight of the birds (which was more widely spread in Example 2 than in Example 1) which led to different temperature profiles during the initial chill. It may be that individual standard chilled birds have a similar maturation curve to the cryogenically crust-frozen birds but that the start time for maturation is delayed by varying amounts in the standard chilled birds.

The average weight loss during cooking of the standard chilled birds was 27.2% with a range of 22.5 to 32.5 per cent. The average weight loss during cooking for the cryogenically crust-frozen birds was 29.2% with a range of 27.3 to 30.7%. In view of the large range in the data, it is not possible to discern a definite trend in the weight loss as maturation proceeds. However, it can be concluded from this data is that there is no large difference in weight loss during cooking between the processes of Examples 1 and 2.

### Example 3

The procedure of Example 1 was repeated but with a liquid nitrogen immersion time of 25 seconds; subsequent transfer to a Cryobatch^{™} where they were subjected to cold nitrogen gas at -19°C for twenty minutes; and then transfer to the +2°C storeroom for 1 or 3 hours. The shear force measurements are shown in Table 5 (*infra*) and the values included (as a solid triangle) in Figure 1.

### Example 4 (Comparative)

The procedure of Example 1 was repeated but with hot boned breasts (i.e. breasts removed before any chilling had occurred). After the 55 seconds immersion in liquid nitrogen (during which time the hot boned breasts were completely frozen), the frozen breasts were transferred to the +2°C storeroom for 1 or 3 hours. The breasts were considerably shrunken and became very misshapen on cooking.

The shear force measurements are shown in Table 6 (*infra*) and the values included (as a solid dot) in Figure 1.

### Example 5

A chicken having an initial temperature of about +40°C (following slaughter, plucking, decapitation and evisceration) was exposed to a cooling temperature of -10°C for 60 minutes. The heat transfer coefficient for the rapid cooling step was 100 W/m²/°C (heat flux of 5000 W/m²). The chicken was then exposed to a temperature of +2°C (with negligible heat transfer) for 60 minutes to allow the temperature of the meat to equilibrate.

The chicken meat was found to have a cooked breast tenderness (as hereinbefore defined) of 43 Newtons when cooked 24 hours later.

### Example 6

A chicken having an initial temperature of about +40°C (following slaughter, plucking, decapitation and evisceration) was exposed to a cooling temperature of -35°C for 10 minutes. The heat transfer coefficient for the rapid cooling step in this simulation was 100 W/m²/°C (heat flux of 750 W/m²). The temperature was then ramped to -13°C over 10 minutes. The heat transfer coefficient while the temperature was ramped was 100 W/m²/°C. The chicken was then exposed to a temperature of +2°C (with negligible heat transfer) for 31 minutes to allow the temperature of the meat to equilibrate.

The chicken meat was found to have a cooked breast tenderness (as hereinbefore defined) of 38.5 Newtons when cooked 24 hours later.

### Example 7 (Comparative)

To illustrate a method that is just outside the scope of the present invention, i.e. a method in which accelerated tenderization of chicken meat does not occur, an additional computer simulation was carried out. The initial temperature of the chicken meat was estimated to be +40°C. The chicken was exposed to a cooling temperature of -30°C for 24 minutes. The heat transfer coefficient for the chilling step was 50 W/m²/°C (heat flux of 3500 W/m²).

The chicken meat was expected to have a cooked breast tenderness (as hereinbefore defined) of above 40 Newtons.

A graph depicting how the heat flux varies over time in this example is shown in Figure 11.

### Example 8

To illustrate that the method of the present invention can be applied successfully to pre-cooled chicken meat, a further computer simulation was carried out. The initial temperature of the meat was assumed to be +2°C. In this simulation, the chicken meat was exposed to a cooling temperature of -30°C for 15 minutes. The heat transfer coefficient for this chilling step in the simulation was 50 W/m²/°C (heat flux of 3500 W/m²). The chicken meat was then exposed to a temperature of +2°C for 36 minutes to allow the temperature of the meat to equilibrate.

The chicken meat was expected to have a cooked breast tenderness (as hereinbefore defined) of about 40 Newtons.

It will be appreciated that the invention is not restricted to the specific details of the Examples and that numerous modifications and variations can be made without departing from the scope of the invention as defined in the following claims.

**TABLE 5**

| Tenderness of cooked breast meat from chilled cryogenically crust-frozen chickens | | | | | | | |
|---|---|---|---|---|---|---|---|
| **Cold storage (minutes)** | **Maximum shear Force (Newtons)** | | | | | | |
| | Breast 1 | Breast 2 | Breast 3 | Breast 4 | Breast 5 | Breast 6 | **Average** |
| **60** | 92.7 | 100.1 | 77.4 | 125.0 | 123.5 | 254.6 | **112.2** |
| **180** | 77.2 | 139.8 | 51.2 | 83.1 | 145.2 | 117.7 | **102.4** |

**TABLE 6**

| Tenderness of cooked breast meat from cryogenically crust-frozen hot boned breasts | | | | | | | |
|---|---|---|---|---|---|---|---|
| **Cold storage (minutes)** | **Maximum shear Force (Newtons)** | | | | | | |
| | Breast 1 | Breast 2 | Breast 3 | Breast 4 | Breast 5 | Breast 6 | **Average** |
| **60** | 98.2 | 92.6 | 114.2 | N/A | | | **101.6** |
| **180** | 126.7 | 158.1 | 92.1 | N/A | | | **125.6** |

## Claims

1. Use of a method comprising:
rapidly cooling at least the breast meat of a dressed freshly slaughtered unboned poultry bird by exposure to a cooling temperature of at most -10°C to provide a frozen crust on the breast and a temperature gradient through the breast meat wherein the reduction in the core temperature of the breast meat is no more than 65% of the reduction in the surface temperature of the breast meat; and
reducing the rate at which the breast is cooled to reduce said temperature gradient whilst maintaining the surface temperature of the breast meat below -2°C for sufficient time to freeze only a portion of the water content of the breast meat, to accelerate tenderization of poultry meat.

2. Use as claimed in Claim 1 wherein the poultry bird is exposed to the cooling temperature for 10 minutes to 120 minutes.

3. Use as claimed in Claim 1 or Claim 2 wherein the poultry bird is exposed to the cooling temperature for 10 minutes to 60 minutes.

4. Use as claimed in any of Claims 1 to 3 wherein the period of time in which the breast meat is cooled at reduced rate is from 25 to 75 minutes.

5. Use as claimed in any of Claims 1 to 4 wherein the temperature is ramped from the cooling temperature over a period of from 10 minutes to 60 minutes.

6. Use as claimed in any of Claims 1 to 5 wherein the tenderized bird is exposed to an equilibrating temperature of from +4°C to +30°C to produce an equilibrated bird.

7. Use as claimed in Claim 6 wherein the tenderized bird is exposed to the equilibrating temperature for sufficient time such that the meat is warmed towards an equilibration temperature of from 0°C to +5°C.

8. Use as claimed in Claim 6 or Claim 7 wherein the temperature of the equilibrated bird is about +2°C.

9. Use as claimed in any of Claims 1 to 8 wherein the poultry bird is cooled by mechanical refrigeration.

10. Use as claimed in any of Claims 1 to 9 wherein the poultry bird is rapidly cooled by exposure to a cooling temperature of from below -10°C to -45°C.

11. Use as claimed in any of Claims 1 to 10 wherein the crust-frozen bird is exposed to a constant temperature of from -15°C to -2°C for sufficient time to freeze only a portion of the water of the breast meat.

12. Use as claimed in Claim 11 wherein the temperature is ramped from the cooling temperature to a temperature of from -15°C to -2°C.

13. Use as claimed in any of Claims 1 to 12 wherein the "reduced" temperature gradient between the core and the surface of the breast meat is no more than 10°C.

14. Use as claimed in Claim 13 wherein the reduced temperature gradient is no more than 5°C.

15. Use as claimed in any of Claims 1 to 14 wherein the surface temperature of the breast meat after said rapid cooling is between from -2°C to -20°C.

16. Use as claimed in Claim 15 wherein the surface temperature of the breast meat after said rapid cooling is about -14°C.

17. Use as claimed in any of Claims 1 to 16 wherein the portion of the water content of the breast meat that is frozen is between from 5 % to 60 % by mass.

18. Use as claimed in Claim 17 wherein the portion of the water content of the breast meat that is frozen is about 10 % by mass.

19. Use as claimed in any of Claims 1 to 18 wherein the poultry bird has been slaughtered using an anoxic gas stunning.

20. Use as claimed in Claim 19 wherein the anoxic gas mixture is a mixture of at least two gases selected from nitrogen, argon and carbon dioxide.

21. A method of accelerating tenderization of poultry meat comprising:
rapidly cooling at least the breast meat of a dressed freshly slaughtered unboned poultry bird by exposure to a cooling temperature of at most -10°C to provide a frozen crust on the breast and a temperature gradient through the breast meat wherein the reduction in the core temperature of the breast meat is no more than 65% of the reduction in the surface temperature of the breast meat;
reducing the rate at which the breast is cooled to reduce said temperature gradient whilst maintaining the surface temperature of the breast meat below -2°C for sufficient time to freeze only a portion of the water content of the breast meat and thereby accelerating tenderization of the meat; and
exposing tenderized birds to an equilibrating temperature of from +4°C to +30°C to produce equilibrated birds,
wherein heat transferred from incoming dressed freshly slaughtered unboned poultry birds is used to warm and at least partially equilibrate tenderized birds.

22. Apparatus for processing poultry meat according to the method as defined in Claim 21, said apparatus comprising:
a cooling zone in which at least the breast of dressed freshly slaughtered unboned poultry birds is rapidly cooled by exposure to a cooling temperature of at most -10°C to provide a frozen crust on the breast and a temperature gradient through the breast meat wherein the reduction in the core temperature of the breast meat is no more than 65% of the reduction in the surface temperature of the breast meat;
a further cooling zone in which the crust-frozen birds are further cooled but at a reduced rate thereby reducing the temperature gradient whilst maintaining the surface temperature of the breast meat below -2°C for sufficient time to freeze only a portion of the water content of the breast meat and thereby tenderize the meat; and
an equilibrating zone in which the tenderized birds are exposed to an equilibrating temperature of from +4°C to +30°C to produce equilibrated birds;
wherein the apparatus further comprises means for transferring heat from incoming dressed freshly slaughtered unboned poultry birds to tenderized birds in the equilibrating zone to warm and at least partially equilibrate said tenderized birds.

23. Apparatus as claimed in Claim 22 further comprising:
a pre-cooling zone in heat exchange fluid communication with the equilibrating zone in which the dressed freshly slaughtered unboned poultry birds are pre-cooled by direct heat exchange with a heat exchange fluid to produce warmed heat exchange fluid; and
propelling means for propelling warmed heat exchange fluid directly on to the surface of tenderized birds in the equilibrating zone.

24. Apparatus as claimed in Claim 23 wherein the heat exchange fluid is air.

25. Apparatus as claimed in Claim 22 further comprising:
a pre-cooling zone thermally integrated with the equilibrating zone in which the dressed freshly slaughtered unboned poultry birds are pre-cooled by direct heat exchange with a first heat exchange fluid to produce warmed first heat exchange fluid;
heat exchange means for transferring heat from at least a portion of said warmed first heat exchange fluid to a second heat exchange fluid to produce warmed second heat exchange fluid;
further heat exchange means in heat exchange fluid communication with the equilibrating zone for transferring heat from at least a portion of said warmed second heat exchange fluid to a third heat exchange fluid to produce warmed third heat exchange fluid; and
propelling means for propelling warmed third heat exchange fluid directly on to the surface of tenderized birds in the equilibrating zone.

26. Apparatus as claimed in Claim 25, wherein the first and third heat exchange fluids are air and the second heat exchange fluid is either brine or glycol.

27. Apparatus as claimed in any one of Claims 23 to 26 wherein the propelling means comprises at least one fan.

28. Apparatus as claimed in any one of Claims 22 to 27 further comprising a holding zone in which the tenderized birds are held with negligible or zero heat transfer.

## Patentansprüche

1. Verwendung eines Verfahrens, das umfasst:
- rasches Kühlen von wenigstens dem Brustfleisch eines koch- bzw. bratfertig gemachten, frisch geschlachteten, von Knochen befreiten Geflügelvogels, indem dieser einer Kühltemperatur von höchstens -10°C ausgesetzt wird, um eine gefrorene Kruste auf der Brust und ein Temperaturgefälle durch das Brustfleisch zur Verfügung zu stellen, wobei die Reduzierung der Kerntemperatur des Brustfleisches nicht mehr als 65% der Reduzierung der Oberflächentemperatur des Brustfleisches beträgt; und
- Reduzierung der Geschwindigkeit, mit der die Brust gekühlt wird, um das Temperaturgefälle zu reduzieren, während die Oberflächentemperatur des Brustfleisches unter -2°C für eine ausreichende Zeit aufrechterhalten wird, um nur einen Teil des Wassergehalts des Brustfleisches gefrieren zu lassen, um die Zartmachung des Geflügelfleisches zu beschleunigen.

2. Verwendung nach Anspruch 1, wobei der Geflügelvogel der Kühltemperatur für 10 Minuten bis 120 Minuten ausgesetzt ist.

3. Verwendung nach Anspruch 1 oder Anspruch 2, wobei der Geflügelvogel der Kühltemperatur für 10 Minuten bis 60 Minuten ausgesetzt ist.

4. Verwendung nach einem der Ansprüche 1 bis 3, wobei die Zeitdauer, in der das Brustfleisch bei einer reduzierten Geschwindigkeit gekühlt wird, von 25 bis 75 Minuten beträgt.

5. Verwendung nach einem der Ansprüche 1 bis 4, wobei die Temperatur von der Kühltemperatur über einen Zeitraum von 10 Minuten bis 60 Minuten ansteigt.

6. Verwendung nach einem der Ansprüche 1 bis 5, wobei der zart gemachte Vogel einer ausgleichenden Temperatur von +4°C bis +30°C ausgesetzt wird, um einen ausgeglichenen Vogel zu erzeugen.

7. Verwendung nach Anspruch 6, wobei der zart gemachte Vogel der ausgleichenden Temperatur für eine ausreichende Zeit derart ausgesetzt wird, dass das Fleisch auf eine Ausgleichstemperatur von 0°C bis +5°C erwärmt wird.

8. Verwendung nach Anspruch 6 oder Anspruch 7, wobei die Temperatur des ausgeglichenen Vogels etwa +2°C beträgt.

9. Verwendung nach einem der Ansprüche 1 bis 8, wobei der Geflügelvogel durch mechanische Kältebehandlung gekühlt wird.

10. Verwendung nach einem der Ansprüche 1 bis 9, wobei der Geflügelvogel rasch gekühlt wird, indem er einer Kühltemperatur von unter -10°C bis -45°C ausgesetzt wird.

11. Verwendung nach einem der Ansprüche 1 bis 10, wobei der an der Kruste gefrorene Vogel einer konstanten Temperatur von -15°C bis -2°C für eine ausreichende Zeit ausgesetzt wird, um nur einen Teil des Wassers des Brustfleisches gefrieren zu lassen.

12. Verwendung nach Anspruch 11, wobei die Temperatur von der Kühltemperatur auf eine Temperatur von -15°C bis -2°C ansteigt.

13. Verwendung nach einem der Ansprüche 1 bis 12, wobei das "reduzierte" Temperaturgefälle zwischen dem Kern und der Oberfläche des Brustfleisches nicht mehr als 10°C beträgt.

14. Verwendung nach Anspruch 13, wobei das reduzierte Temperaturgefälle nicht mehr als 5°C beträgt.

15. Verwendung nach einem der Ansprüche 1 bis 14, wobei die Oberflächentemperatur des Brustfleisches nach dem raschen Kühlen zwischen -2°C und -20°C beträgt.

16. Verwendung nach Anspruch 15, wobei die Oberflächentemperatur des Brustfleisches nach dem raschen Kühlen etwa -14°C beträgt.

17. Verwendung nach Anspruch 1 bis 16, wobei der Teil des Wassergehalts des Brustfleisches, der gefroren ist, zwischen 5% und 60% der Masse beträgt.

18. Verwendung nach Anspruch 17, wobei der Teil des Wassergehalts des Brustfleisches, der gefroren ist, 10% der Masse beträgt.

19. Verwendung nach einem der Ansprüche 1 bis 18, wobei der Geflügelvogel durch Verwendung eines anoxischen Betäubungsgases geschlachtet wurde.

20. Verwendung nach Anspruch 19, wobei das anoxische Gasgemisch ein Gemisch aus wenigstens zwei Gasen ist, die aus Stickstoff, Argon und Kohlendioxid ausgewählt werden.

21. Verfahren zur Beschleunigung der Zartmachung von Geflügelfleisch, das umfasst:
- rasches Kühlen von wenigstens dem Brustfleisch eines koch- bzw. bratfertig gemachten, frisch geschlachteten, von Knochen befreiten Geflügelvogels, indem dieser einer Kühltemperatur von höchstens -10°C ausgesetzt wird, um eine gefrorene Kruste auf der Brust und eine Temperaturgefälle durch das Brustfleisch zur Verfügung zu stellen, wobei die Reduzierung der Kerntemperatur des Brustfleisches nicht mehr als 65% der Reduzierung der Oberflächentemperatur des Brustfleisches beträgt;
- Reduzierung der Geschwindigkeit, mit der die Brust gekühlt wird, um das Temperaturgefälle zu reduzieren, während die Oberflächentemperatur des Brustfleisches unter -2°C für eine ausreichende Zeit aufrechterhalten wird, um nur einen Teil des Wassergehalts des Brustfleisches gefrieren zu lassen und **dadurch** die Zartmachung des Geflügelfleisches zu beschleunigen, und
- Aussetzen der zart gemachten Vögel einer ausgleichenden Temperatur von +4°C bis +30°C, um ausgeglichene Vögel zu erzeugen,
wobei die von den ankommenden koch- bzw. bratfertig gemachten, frisch geschlachteten, von Knochen befreiten Geflügelvögel übertragene Wärme verwendet wird, und die ausgeglichenen zart gemachten Vögel wenigstens teilweise aufzuwärmen.

22. Vorrichtung zum Verarbeiten von Geflügelfleisch entsprechend dem Verfahren, wie es in Anspruch 21 definiert ist, wobei das Verfahren umfasst:
- eine Kühlzone, in der wenigstens die Brust des koch- bzw. bratfertig gemachten, frisch geschlachteten, von Knochen befreiten Geflügelvogels, indem dieser **dadurch** rasch gekühlt wird, dass er einer Kühltemperatur von höchstens -10°C ausgesetzt wird, um eine gefrorene Kruste auf der Brust und ein Temperaturgefälle durch das Brustfleisch zur Verfügung zu stellen, wobei die Reduzierung der Kerntemperatur des Brustfleisches nicht mehr als 65% der Reduzierung der Oberflächentemperatur des Brustfleisches beträgt;
- eine weitere Kühlzone, in der die an der Kruste gefrorenen Vögel weiter gekühlt werden, aber bei einer reduzierten Geschwindigkeit, wobei **dadurch** das Temperaturgefälle reduziert wird, während die Oberflächentemperatur des Brustfleisches unter -2°C für eine ausreichende Zeit aufrechterhalten wird, um nur einen Teil des Wassergehalts des Brustfleisches gefrieren zu lassen und **dadurch** das Fleisch zart zu machen; und
- eine ausgleichende Zone, in der die zart gemachten Vögel einer ausgleichenden Temperatur von +4°C bis +30°C ausgesetzt werden, um ausgeglichene Vögel zu erzeugen;
wobei die Vorrichtung des Weiteren eine Anordnung zum Übertragen von Wärme von den ankommenden koch- bzw. bratfertig gemachten, frisch geschlachteten, von Knochen befreiten Geflügelvögel auf die zart gemachten Vögel in der ausgleichenden Zone umfasst, um die zart gemachten Vögel aufzuwärmen und wenigstens teilweise auszugleichen.

23. Vorrichtung nach Anspruch 22, die des Weiteren umfasst:
- eine Vorkühlzone in Wärmeaustausch-Fluidverbindung mit der ausgleichenden Zone, in der die koch- bzw. bratfertig gemachten, frisch geschlachteten, von Knochen befreiten Geflügelvögel durch direkten Wärmeaustausch mit einem Wärmeaustausch-Fluid vorgekühlt werden, um ein erwärmtes Wärmeaustausch-Fluid zu erzeugen; und
- eine Vortriebsanordnung zum Vortreiben von erwärmtem Wärmeaustausch-Fluid direkt auf die Oberfläche der zart gemachten Vögel in der ausgleichenden Zone.

24. Vorrichtung nach Anspruch 23, wobei das Wärmeaustausch-Fluid Luft ist.

25. Vorrichtung nach Anspruch 22, die des Weiteren umfasst:
- eine Vorkühlzone, die mit der ausgleichenden Zone thermisch integriert ist, in der die koch- bzw. bratfertig gemachten, frisch geschlachteten, von Knochen befreiten Geflügelvögel durch direkten Wärmeaustausch mit einem ersten Wärmeaustausch-Fluid vorgekühlt werden, um ein erwärmtes erstes Wärmeaustausch-Fluid zu erzeugen;
- Wärmeaustausch-Anordnung zum Übertragen von Wärme von wenigstens einem Teil des erwärmten ersten Wärmeaustausch-Fluides auf ein zweites Wärmeaustausch-Fluid, um ein erwärmtes zweites Wärmeaustausch-Fluid zu erzeugen;
- weitere Wärmeaustausch-Anordnung in Wärmeaustausch-Fluidverbindung mit der ausgleichenden Zone zum Übertragen von Wärme von wenigstens einem Teil des erwärmten zweiten Wärmeaustausch-Fluides auf ein drittes Wärmeaustausch-Fluid, um ein erwärmtes drittes Wärmeaustausch-Fluid zu erzeugen; und
- eine Vortriebsanordnung zum Vortreiben von erwärmtem dritten Wärmeaustausch-Fluid direkt auf die Oberfläche der zart gemachten Vögel in der ausgleichenden Zone.

26. Vorrichtung nach Anspruch 25, wobei das erste und das dritte Wärmeaustausch-Fluid Luft und das zweite Wärmeaustausch-Fluid entweder Salzlake oder Glykol ist.

27. Vorrichtung nach einem der Ansprüche 23 bis 26, wobei die Vortriebsanordnung wenigstens ein Gebläse ist.

28. Vorrichtung nach einem der Ansprüche 22 bis 27, die des Weiteren eine Haltezone umfasst, in der die zart gemachten Vögel mit geringfügiger oder Null-Wärmeübertragung gehalten werden.

## Revendications

1. Utilisation d'un procédé comprenant :
refroidir rapidement au moins la viande de poitrine d'une volaille parée, fraîchement abattue, désossée, par exposition à une température de refroidissement d'au plus - 10°C pour fournir une croûte sur la poitrine et un gradient de température à travers la viande de poitrine, dans laquelle la réduction de la température au coeur de la viande de poitrine n'est pas supérieure à 65 % de la réduction de la température en surface de la viande de poitrine ; et
réduire la vitesse à laquelle la poitrine est refroidie pour réduire ledit gradient de température tout en maintenant la température en surface de la viande de poitrine en dessous de -2°C pendant une durée suffisante pour congeler uniquement une partie du contenu aqueux de la viande de poitrine, pour accélérer l'attendrissement de la viande de poitrine.

2. Utilisation telle que revendiquée dans la revendication 1, dans laquelle la volaille est exposée à la température de refroidissement pendant 10 minutes à 120 minutes.

3. Utilisation telle que revendiquée dans la revendication 1 ou la revendication 2, dans laquelle la volaille est exposée à la température de refroidissement pendant 10 minutes à 60 minutes.

4. Utilisation telle que revendiquée dans l'une quelconque des revendications 1 à 3, dans laquelle la période pendant laquelle la viande de poitrine est refroidie à une vitesse réduite est de 25 à 75 minutes.

5. Utilisation telle que revendiquée dans l'une quelconque des revendications 1 à 4, dans laquelle on fait grimper la température depuis la température de refroidissement sur une période de 10 minutes à 60 minutes.

6. Utilisation telle que revendiquée dans l'une quelconque des revendications 1 à 5, dans laquelle la volaille attendrie est exposée à une température d'équilibrage de +4°C à +30°C pour produire une volaille équilibrée.

7. Utilisation telle que revendiquée dans la revendication 6, dans laquelle la volaille attendrie est exposée à la température d'équilibrage pendant une durée suffisante, telle que la viande est réchauffée vers une température d'équilibrage de 0°C à +5°C.

8. Utilisation telle que revendiquée dans la revendication 6 ou la revendication 7, dans laquelle la température de la volaille équilibrée est d'environ +2°C.

9. Utilisation telle que revendiquée dans l'une quelconque des revendications 1 à 8, dans laquelle la volaille est refroidie par une réfrigération mécanique.

10. Utilisation telle que revendiquée dans l'une quelconque des revendications 1 à 9, dans laquelle la volaille est rapidement refroidie par exposition à une température de refroidissement allant de moins de -10°C à - 45°C.

11. Utilisation telle que revendiquée dans l'une quelconque des revendications 1 à 9, dans laquelle la volaille congelée en surface est exposée à une température constante de -15°C à -2°C pendant une durée suffisante pour congeler uniquement une partie de l'eau de la viande de poitrine.

12. Utilisation telle que revendiquée dans la revendication 11, dans laquelle on fait grimper la température depuis la température de refroidissement jusqu'à une température de -15°C à -2°C.

13. Utilisation telle que revendiquée dans l'une quelconque des revendications 1 à 12, dans laquelle le gradient de température « réduit » entre le coeur et la surface de la viande de poitrine n'est pas supérieur à 10°C.

14. Utilisation telle que revendiquée dans la revendication 13, dans laquelle le gradient de température réduit n'est pas supérieur à 5°C.

15. Utilisation telle que revendiquée dans l'une quelconque des revendications 1 à 14, dans laquelle la température en surface de la viande de poitrine après ledit refroidissement rapide se situe entre -2°C et -20°C.

16. Utilisation telle que revendiquée dans la revendication 15, dans laquelle la température en surface de la viande de poitrine après ledit refroidissement rapide est d'environ -14°C.

17. Utilisation telle que revendiquée dans l'une quelconque des revendications 1 à 16, dans laquelle la partie du contenu aqueux de la viande de poitrine qui est congelée se situe entre 5 % et 60 % en masse.

18. Utilisation telle que revendiquée dans la revendication 17, dans laquelle la partie du contenu aqueux de la viande de poitrine qui est congelée est d'environ 10 % en masse.

19. Utilisation telle que revendiquée dans l'une quelconque des revendications 1 à 18, dans laquelle la volaille a été abattue en utilisant un étourdissement par un gaz anoxique.

20. Utilisation telle que revendiquée dans la revendication 19, dans laquelle le mélange de gaz anoxique est un mélange d'au moins deux gaz choisis parmi l'azote, l'argon et le dioxyde de carbone.

21. Procédé d'accélération de l'attendrissement d'une viande de volaille comprenant :
refroidir rapidement au moins la viande de poitrine d'une volaille parée, fraîchement abattue, désossée, par exposition à une température de refroidissement d'au plus - 10°C pour fournir une croûte sur la poitrine et un gradient de température à travers la viande de poitrine, dans laquelle la réduction de la température au coeur de la viande de poitrine n'est pas supérieure à 65 % de la réduction de la température en surface de la viande de poitrine ;
réduire la vitesse à laquelle la poitrine est refroidie pour réduire ledit gradient de température tout en maintenant la température en surface de la viande de poitrine en dessous de -2°C pendant une durée suffisante pour congeler uniquement une partie du contenu aqueux de la viande de poitrine et accélérer par ce moyen l'attendrissement de la viande ; et
exposer les volailles attendries à une température d'équilibrage de +4°C à +30°C pour produire des volailles équilibrées,
dans lequel la chaleur transférée depuis les volailles parées, fraîchement abattues, désossées, entrantes est utilisée pour réchauffer et au moins équilibrer partiellement les volailles attendries

22. Appareil destiné à traiter une viande de volaille selon le procédé tel que défini dans la revendication 21, ledit appareil comprenant :
une zone de refroidissement dans laquelle au moins la poitrine de volailles parées, fraîchement abattues, désossées est rapidement refroidie par exposition à une température de refroidissement d'au plus -10°C pour fournir une croûte congelée sur la poitrine et un gradient de température à travers la viande de poitrine, dans laquelle la réduction de la température au coeur de la viande de poitrine n'est pas supérieure à 65 % de la réduction de la température en surface de la viande de poitrine ;
une autre zone de refroidissement dans laquelle les volailles congelées en surface sont davantage refroidies mais à une vitesse réduite, réduisant par ce moyen le gradient de température tout en maintenant la température en surface de la viande de poitrine en dessous de -2°C pendant une durée suffisante pour congeler uniquement une partie du contenu aqueux de la viande de poitrine et attendrir par ce moyen la viande ; et
une zone d'équilibrage dans laquelle les volailles attendries sont exposées à une température d'équilibrage de +4°C à +30°C pour produire des volailles équilibrées,
dans lequel l'appareil comprend en outre un moyen pour transférer la chaleur des volailles parées, fraîchement abattues, désossées, entrantes pour attendrir les volailles dans la zone d'équilibrage pour réchauffer et au moins équilibrer partiellement lesdites volailles attendries.

23. Appareil tel que revendiqué dans la revendication 22 comprenant en outre :
une zone de pré-refroidissement en communication par un fluide d'échange thermique avec la zone d'équilibrage dans laquelle les volailles parées, fraîchement abattues, désossées sont pré-refroidies par un échange direct de chaleur avec un fluide d'échange thermique pour produire un fluide d'échange thermique chauffé ; et
un moyen de propulsion pour propulser le fluide d'échange thermique chauffé directement sur la surface des volailles attendries dans la zone d'équilibrage.

24. Appareil tel que revendiqué dans la revendication 23, dans lequel le fluide d'échange thermique est l'air.

25. Appareil tel que revendiqué dans la revendication 22 comprenant en outre :
une zone de pré-refroidissement thermiquement intégrée à la zone d'équilibrage dans laquelle les volailles parées, fraîchement abattues, désossées sont pré-refroidies par un échange thermique direct avec un premier fluide d'échange thermique pour produire un premier fluide d'échange thermique chauffé ;
un moyen d'échange thermique pour transférer la chaleur depuis au moins une partie dudit premier fluide d'échange thermique chauffé vers un deuxième fluide d'échange thermique produire un deuxième fluide d'échange thermique chauffé ;
un autre moyen d'échange thermique en communication par un fluide d'échange thermique avec la zone d'équilibrage pour transférer la chaleur depuis au moins une partie dudit deuxième fluide d'échange thermique chauffé vers un troisième fluide d'échange thermique pour produire un troisième fluide d'échange thermique chauffé ; et
un moyen de propulsion pour propulser le troisième fluide d'échange thermique chauffé directement sur la surface des volailles attendries dans la zone d'équilibrage.

26. Appareil tel que revendiqué dans la revendication 25, dans lequel les premier et troisième fluides d'échange thermique sont constitués par l'air, et le deuxième fluide d'échange thermique est soit de la saumure, soit du glycol.

27. Appareil tel que revendiqué dans l'une quelconque des revendications 23 à 26, dans lequel le moyen de propulsion comprend au moins un ventilateur.

28. Appareil tel que revendiqué dans l'une quelconque des revendications 22 à 27, comprenant en outre une zone d'attente dans laquelle les volailles attendries sont conservées avec un transfert de chaleur négligeable voire nul.
